# EUROPÄISCHE PATENTSCHRIFT

(11) **EP 1 766 184 B1**
(45) Veröffentlichungstag und Bekanntmachung des Hinweises auf die Patenterteilung: **14.05.2008**
(21) Anmeldenummer: 05756992.3
(22) Anmeldetag: 06.07.2005
(51) Int. Cl.: E21B 37/06

(54) **VERWENDUNG VON LITHIUMSALZEN VON FETTALKOHOLSULFATEN ZUM REINIGEN VON BOHRLÖCHERN, BOHRGERÄTEN ODER BOHRKLEIN**
USE OF LITHIUM SALTS OF FATTY ALCOHOL SULPHATES FOR CLEANING BOREHOLES, BORING DEVICES AND BORINGS
UTILISATION DE SELS DE LITHIUM DE SULFATES D'ALCOOLS GRAS POUR NETTOYER DES TROUS DE FORAGE, DES EQUIPEMENTS DE FORAGE OU DES DEBLAIS DE FORAGE

(30) Priorität: 15.07.2004 DE 102004034141
(43) Veröffentlichungstag der Anmeldung: 28.03.2007
(73) Patentinhaber: Cognis Oleochemicals GmbH, 40589 Düsseldorf (DE)
(72) Erfinder: MÜLLER, Heinz, 40789 Monheim (DE); MAEKER, Diana, 40789 Monheim (DE); HERZOG, Nadja, 41352 Korschenbroich (DE)
(74) Vertreter: Herzog, Martin
(86) Internationale Anmeldenummer: PCT/EP2005/007274
(87) Internationale Veröffentlichungsnummer: WO 2006/007977

(56) Entgegenhaltungen:
- DE-B- 1 289 005
- US-A- 3 486 560
- US-A- 4 288 333

## Beschreibung

Die vorliegende Erfindung betrifft die Verwendung bestimmter Fettalkoholsulfate zum Reinigen von Bohrlöchern, Bohrgeräten oder Bohrklein sowie Verfahren zur Reinigung von Bohrlöchern, Bohrgeräten oder Bohrklein.

Beim Erbohren und Fördern von Erdöl- oder Erdgasvorkommen müssen an vielen Stellen Reinigungsschritte eingefügt werden, um einen problemlosen Ablauf des Bohr- und Förderprozesses zu gewährleisten. So muss das Bohrloch nach der eigentlichen Bohrung für die Förderung von Öl oder Gas vorbereitet werden (Komplettierung). Dazu wird zur Stabilisierung des Bohrlochs ein äußeres Rohr, das so genannte "casing" oder Futterohr eingebracht, und einzementiert. Der Zement wird in einer wässrigen, flüssigen Form durch das Rohr geleitet, tritt am unteren Ende des Casings aus und erhärtet zwischen Bohrlochwand und äußerem Rohr. Um einen optimalen Zementierungsprozess zu gewährleisten, ist es notwendig die Bohrlochwand und die Casings von anhaftenden Resten der Bohrspülung und feinteiligen anhaftende Feststoffen zu befreien. Anderenfalls besteht die Gefahr, dass Hohlräume oder Kanäle in der Betonschicht entstehen, die die Stabilität des Betons verringern. Außerdem können Reste der Bohrspülung mit dem Zement eine gelatinöse Masse ausbilden, die das Abbinden des Zements verhindert, was ebenfalls zu einer verringerten Stabilität des Zementmantels führt.

Nachdem das Casing in das Bohrloch eingebracht worden ist, wird das eigentliche Förderrohr, das einen kleineren Durchmesser als das Casing hat, installiert. Zwischen die äußere Wand des Förderrohrs und der inneren Wand des Casings wird noch eine Dichtungsflüssigkeit eingebracht. Vor dem Einbringen der Dichtungsflüssigkeit, der sogenannten "packer-fluid" wird der Ringraum zwischen Casing und Förderrohr gereinigt, insbesondere müssen alle feinteiligen Feststoffe, die noch an der Casing- oder Förderrohrwand anhaften, entfernt werden, um die Leistung der Dichtflüssigkeit zu gewährleisten.

Die Auswahl des für die oben geschilderten Aufgaben geeigneten Reinigungsmittels ist auch von der Art der eingesetzten Bohrspülung abhängig. Man kann prinzipiell zwischen wasser- und ölbasierten Spülungen unterscheiden. Heute werden häufig ölbasierte Spülungen eingesetzt, entweder als sogenannten "true-oil-muds", d.h. Spülungen, die kein oder nur untergeordnete Mengen an dispergiertem Wasser enthalten, oder so genannte "invertmuds", die zwischen 5 und 45 Gew.-% Wasser als dispergierte Phase enthalten, also eine W/O-Emulsion ausbilden. Außerdem sind wasser-basierte O/W-Emulsionen bekannt, die in einer geschlossenen wässrigen Phase eine heterogen, feindisperse Ölphase enthalten. Als Ölphase werden üblicherweise Petroleumprodukte, wie Mineral- oder Dieselöle eingesetzt. Aufgrund der sich immer weiter verschärfenden ökologischen Anforderungen wurden aber in jüngerer Zeit auch synthetische Ölphasen entwickelt, die beispielsweise Ester bestimmter Fettsäuren enthalten. Bohrspülungen auf Basis derartiger Esteröle werden exemplarisch in den EP-Schriften 386 636, 374 671 und 374 672 beschrieben, und zeigen gegenüber Petroleumprodukten in Bezug auf ihre biologischen Abbaubarkeit und Toxizität deutlich verbesserte Eigenschaften. Bei einigen Bohrspülungen auf Basis synthetischer Ester kann man die Bildung klebrigen Rückständen auf Metalloberflächen bzw. der Bohrlochwand beobachten, die ebenfalls zu störenden Ablagerungen führen können.

Die Reinigungsmittel werden, ähnlich wie der Zement beim Zementierungsprozess, in flüssiger Form durch das Bohrgestänge nach unten gepumpt, treten an der Sohle des Bohrlochs aus und werden im Ringraum zwischen Rohr und Bohrlochwand nach oben gespült. Dabei lösen sie Reste der Bohrspülung und an den Oberflächen anhaftende Feststoffteilchen ab und transportieren diese aus dem Bohrloch heraus. Ein derartiges Verfahren wird beispielsweise in der WO 94/29570 im Detail beschrieben. Man setzt die Mittel üblicherweise in Form von wässrigen oder nichtwässrigen Lösungen bzw. Dispersionen ein. Sie können aber auch in konzentrierter, fester oder flüssiger Form direkt der Bohrspülung zugesetzt werden. Reinigungsmittel für die oben geschilderten Aufgaben können beispielsweise Mischungen von Citronensäure, Pyrophosphat und Kaliumsalzen sein, die in fester oder gelöster Form verwendet werden. Diese Mittel eignen sich sowohl für true-oil- als auch für Invert-Bohrspülungen.

Die WO 95/17244 beschreibt eine Zusammensetzung zum Reinigen von ölverschmutzten Oberflächen, die Tenside welche HLB-Werte von mindestens 8 aufweisen in Kombination mit einem Öl enthalten. Als bevorzugte Tenside werden ethoxylierte Sorbitanfettsäureester genannt. Nun zeigen Mittel auf Basis von ethoxylierten Sorbitanfettsäureestern zwar eine gute Reinigungswirkung aufweisen, aber in Bezug auf die biologische Abbaubarkeit und die Toxizität können derartige Mittel noch nicht alle Anforderungen, die eine sich zunehmend verschärfende Umweltgesetzgebung fordert, erfüllen.
In der WO 98/19043 werden spezifische Sojapolyolalkoxylate als hochwirksame Reinigungsmittel für Bohrlöcher bzw. Bohrgeräte offenbart. Es bleibt aber ein ständiger Bedarf, die Umweltverträglichkeit der Reinigungsmittel und insbesondere der Toxizität und biologische Abbaubarkeit zu verringern, wobei möglichst die Reinigungswirkung gesteigert werden sollte.

Es war daher eine Aufgabe der vorliegenden Erfindung, Reinigungsmittel für Bohrlöcher, Bohrgeräte oder Bohrklein bereitzustellen, die gegenüber den bekannten Mitteln bei zumindest gleicher Reinigungsleistung eine verbesserte Umweltverträglichkeit, insbesondere eine verringerte Toxizität aufweisen.

Es wurde nun gefunden, dass spezifische Fettalkoholsulfate die gestellte Aufgabe erfüllen. Gegenstand der vorliegenden Erfindung ist in einer ersten Ausführungsform die Verwendung von Verbindungen der allgemeinen Formel (I) R-O-SO₃⁻ Li⁺in der R für einen gesättigten, ungesättigten, verzweigten oder linearen Alkylrest mit 8 bis 22 C-Atomen steht, zur Reinigung von Bohrlöchern, Bohrgeräten oder Bohrklein. Das wesentliche Element der vorliegenden technischen Lehre ist die Beschränkung auf Lithiumsalze, da nur diese die gewünschten Eigenschaften aufweisen.

Unter Alkyl- und/oder Alkenylsulfaten, die auch häufig als Fettalkoholsulfate bezeichnet werden, sind die Sulfatierungsprodukte primärer Alkohole zu verstehen, die der Formel (I) folgen. Fettalkoholsulfate sind allgemein eine Gruppe von Aniontensiden der allgemeinen Formel R-O-SO₃X, die z.B. konkret durch Umsetzung von Fettalkoholen mit konz. Schwefelsäure, gasförmiger Schwefeltrioxid, Chlorsulfonsäure oder Amidosulfonsäure erhalten werden. Fettalkoholsulfate zeigen eine gute Wasserlöslichkeit, geringe Härteempfindlichkeit und bei ausreichender Kettenlänge ein hohes Waschvermögen. Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelen'schen Oxosynthese erhalten werden. Besonders bevorzugt sind Alkylsulfate auf Basis von C8 bis C16 Fettalkoholen, insbesondere auf Basis von C8 bis C14 Fettalkoholen. Dabei können sowohl reine Verbindungen als auch beliebige, auch technische, Mischungen unterschiedlicher Verbindungen der Formel (I) erfindungsgemäß Verwendung finden.

Besonders bevorzugt sind solche Fettalkohole, die C12-Alkylketten aufweisen, also auf dem Dodecylalkohol (Trivialname: Laurylalkohol) basieren. Besonders bevorzugt sind solche Verbindungen der Formel (I) in denen der Rest R mindestens zu 50 Gew.-% eine C12-Kette aufweist. Ganz besonders bevorzugt sind Verbindungen, deren Anteil an C12 höher als 50 Gew.-% ist. Im Prinzip können die Reste R in der Formel (I) aber auch ungesättigt und/oder verzweigt sein.

Zur Anwendung kommen die Lithiumsalze in Form ihrer wässerigen Lösungen. Dabei ist es bevorzugt, dass die Lösungen die Salze gemäß Formel (I) in Mengen zwischen 1 und 35 Gew.-%, vorzugsweise in Mengen von 5 bis 25 Gew.-% enthalten. Die Menge kann variieren und wird an die Art und den Umfang der Verschmutzung angepasst.

Die Lithiumsalze der Fettalkoholsulfate werden insbesondere zur Reinigung von Bohrlöchern verwendet, wobei hier insbesondere die Wände des Bohrlochs selber aber auch Förder- oder Futterrohre bzw. Casingwände unter Verwendung der erfindungsgemäßen Verbindungen gereinigt werden können. Unter Bohrgeräte fallen beispielsweise Rohrleitungen und Pipelines aber auch Werkzeuge, die bei Bohrprozessen verwendet werden und die mit anderen Bohrflüssigkeiten und/oder Erdöl in Kontakt kommen. Weiterhin lassen sich die Lithiumsalze zum Reinigen von Bohrklein verwenden, den sogenannten "cuttings". Diese fallen beim Erbohren an und müssen bei off-shore-Bohrungen auf den Seeboden in der Umgebung der Bohrplattform abgelagert werden, was zu einem starken Eintrag von Mineralöl in die Umwelt führen kann. Um eine ökologische Belastung des Meeres weitgehend zu vermeiden, werden die cuttings vorher gereinigt und von den Resten der Bohrspülung befreit.

Die erfindungsgemäßen Mittel können zu allen dem Fachmann bekannten Reinigungsvorgängen, die im Bereich der Erdreichbohrungen auftreten, sowohl bei off-shore-Bohrungen als auch bei Bohrungen an Land, verwendet werden. Dazu gehört insbesondere die Entfernung von Paraffinablagerungen von Bohrlochwänden. Üblicherweise werden Bohrlöcher gereinigt, indem eine Reinigungsflüssigkeit unter Druck durch das Bohrloch gepumpt wird und durch die Reinigungsflüssigkeit die Ablagerungen von den Wänden des Bohrlochs entfernt werden. Anschließend werden die Verunreinigungen mit der Flüssigkeit aus dem Bohrloch transportiert. Beansprucht wird daher auch ein Verfahren zum Reinigen von Bohrlöchern, indem durch das Bohrloch nach der oben beschriebenen Methode eines der erfindungsgemäßen Mittel gepumpt wird.

Die Mittel können auch zur Reinigung von vorzugsweise ölverschmutzten Gegenständen, wie Werkzeuge, Rohrleitungen oder Bohrklein, die im Bereich der Erdreichbohrung anfallen, verwendet werden. Dazu wird eine erfindungsgemäße wässerige Lösung auf die Oberflächen der Gegenstände aufgesprüht oder aufgetragen oder die zu reinigenden Gegenstände werden in die Zusammensetzungen eingetaucht. Dabei lösen sich die Verunreinigungen von den Oberflächen. Anschließend werden die Oberflächen so mit Wasser in Kontakt gebracht, dass die Mittel zusammen mit den Verunreinigungen entfernt werden, beispielsweise indem die Oberfläche mit einem Wasserstrahl abgespritzt werden.

Ein weitere Gegenstand der vorliegenden Erfindung betrifft daher ein Verfahren zum Reinigen der Oberflächen von Bohrgeräten oder von Bohrklein, indem die Oberflächen zunächst mit einer Reinigungsflüssigkeit in Kontakt gebracht und anschließend die Oberflächen mit Wasser abgespült werden, wobei als Reinigungsflüssigkeit die oben beschriebenen Lithiumsalze in form ihrer wässerigen Lösungen verwendet werden.

### Beispiele

### Messung der Reinigungseffekte

Es wurden Tests mit den erfindungsgemäßen Lithium-Salzen und den dazu korrespondierenden Natriumsalzen durchgeführt. Dazu wurden jeweils 8 g einer Bohrspülung mit einem Pinsel auf die Innenseite eines (vorab gewogenen) Messbechers aufgetragen. Anschließend wurden 200 ml der 5 Gew.-%igen wässerigen Reinigerlösung in den Becher gegeben und 3 Minuten per Hand geschüttelt.
Das Becherglas wird mit der Öffnung nach unten für 2 Minuten auf ein Filterpapier gestellt. Danach wird das Gewicht des Messbechers bestimmt. Die Gewichtsabnahme ist ein Maß für die Reinigungsleistung. Würde theoretisch der Messbecher das Gewicht vor der Messung erreichen, würde dies als 100 %ige Reinigungsleistung gewertet.

Die Bohrspülung wies die folgende Zusammensetzung auf:

| | |
|---|---|
| Esteröl C8-C14-Fettsäure-2-ethylhexylester | 250 ml |
| Emulgator (Amidoamin) | 10 g |
| Fluid-loss Additiv (hydrophobierter Lignit) | 10 g |
| Lime | 1,2 g |
| CaCl₂ * 2 H₂O | 27 g |
| Beschwerer (Calciumcarbonat) | 100 g |
| BaSO₄ | 100 g |
| Hymond Prima Clay | 43 g |
| Wasser | 84 g |

Das Öl/Wasser-Verhältnis betrug 75 : 25. Die Bohrspülung wurde bei 200 °F (93 °C) für 16 h gealtert. Die Ergebnisse des Tests sind in der Tabelle 1 aufgeführt:

**Tabelle 1**

| **Bezeichnung** | **Produkt** | **Leistung in %** |
|---|---|---|
| **V1** | Na-Laurylsulfat C12/C14, 90 % (Aktivsubstanzgehalt) | 75 |
| **V2** | Na-Laurylsulfat C12, 95 % (Aktivsubstanzgehalt) | 62 |
| **E1** | Lithiumlaurylsulfat, C8-C12, 30 % (Aktivsubstanzgehalt) | 88 |

Die Produkte kamen als 5 Gew.=%ige wässerige Lösungen zum Einsatz. Die erfindungsgemäßen Lithiumsalze zeigen dabei eine deutlich gesteigerte Reinigungsleistung bei verringertem Einsatz an Aktivsubstanz.

In einem weiteren Test analog der obigen Beschreibung wurde die Reinigungsleistung der erfindungsgemäßen Lithiumsalze im Vergleich mit Sojapolyolethoxylaten (gemäß WO 98/19043) und handelsüblichen Alkylpolyglycosiden getestet. Die Ergebnisse sind in Tabelle 2 aufgeführt:

**Tabelle 2**

| **Bezeichnung** | **Produkt** | **Leistung in %** |
|---|---|---|
| **V3** | Sojapolyolethoxylat (5 % Aktivsubstanz) | 58 |
| **V4** | C8 10 Alkyl-1.5-glucosid (63 % Aktivsubstanz) | 62 |
| **E1** | Lithiumlaurylsulfat, C8-C12, 30 % in Wasser | 88 |

### Toxizitätsmessungen

Für die Produkte V3, V4 und das erfindungsgemäße Salz E1 wurde die Toxizität an *Skeletonema costatum* (nach ISO 10253 1988) und *Corophium volutator* (nach OSPRACOM Guidelines (1995) A sediment Bioassy using an amphipod) gemessen, sowie ein aerober Abbautest durchgeführt (Marine Bodies ISO/TC 147/SC 5/WG 4 N 141).

Die Ergebnisse sind in der Tabelle 3 wiedergegeben:

**Tabelle 3:**

| **Reiniger** | **Skeletonema 72 h EC 50 (mg/l)** | **Corophium volutator 10 d, LC 50 (mg/kg)** | **Aerober Abbau (28 d) in %** |
|---|---|---|---|
| **V3** | 16 | 1888 | 36 |
| **V4** | 20 | keine nach 433 | 38 |
| **E1** | 33 | 6585 | 98 |

## Patentansprüche

1. Verwendung von Verbindungen der allgemeinen Formel (I)
R-O-SO₃⁻Li⁺ (I)
in der R für einen gesättigten, ungesättigten, verzweigten oder linearen Alkylrest mit 8 bis 22 C-Atomen steht, zur Reinigung von Bohrlöchern, Bohrgeräten oder Bohrklein.

2. Verwendung nach Anspruch 1, **dadurch gekennzeichnet, dass** Verbindungen der allgemeinen Formel (I) ausgewählt sind, in denen R für einen Alkylrest mit 8 bis 16, vorzugsweise 8 bis 14 C-Atome steht

3. Verwendung nach den Ansprüchen 1 bis 2, **dadurch gekennzeichnet, dass** Verbindungen der Formel (I) ausgewählt werden, in denen der Rest R überwiegend oder vollständig 12 C-Atome enthält.

4. Verwendung nach den Ansprüchen 1 bis 3, **dadurch gekennzeichnet, dass** solche Verbindungen der Formel (I) ausgewählt sind, in denen R für einen linearen, ungesättigten Alkylrest steht.

5. Verfahren zum Reinigen von Bohrlöchern, indem eine Reinigungsflüssigkeit durch das Bohrloch gepumpt wird, **dadurch gekennzeichnet, dass** als Reinigungsflüssigkeit ein wässeriges Mittel, enthaltend Lithiumsalze gemäß Formel (I) verwendet wird.

6. Verfahren nach Anspruch 5, **dadurch gekennzeichnet, dass** wässerige Mittel verwendet werden, die zwischen 1 und 35 Gew.-%, vorzugsweise zwischen 5 und 25 Gew.-% an Lithiumsalzen der Formel (I) enthalten.

7. Verfahren zum Reinigen der Oberflächen von Bohrgeräten oder von Bohrklein, indem die Oberflächen zunächst mit einer Reinigungsflüssigkeit in Kontakt gebracht und anschließend die Oberflächen mit Wasser abgespült werden, wobei als Reinigungsflüssigkeit eine wässeriges Mittel, enthaltend Lithiumsalze gemäß Formel (I) verwendet wird.

## Claims

1. Use of compounds corresponding to general formula (I):
R-O-SO₃⁻Li⁺ (I)
in which R represents a saturated, unsaturated, branched or linear alkyl radical containing from 8 to 22 carbon atoms, for cleaning boreholes, drilling equipment or drill cuttings.

2. Use according to claim 1, **characterised in that** compounds of general formula (I), in which R represents an alkyl radical containing from 8 to 16, preferably 8 to 14 carbon atoms, are selected.

3. Use according to claims 1 to 2, **characterised in that** compounds of formula (I), in which the radical R predominantly or completely contains 12 carbon atoms, are selected.

4. Use according to claims 1 to 3, **characterised in that** compounds of formula (I), in which R represents a linear, unsaturated alkyl radical, are selected.

5. Process for cleaning boreholes by pumping a cleaning liquid through the borehole, **characterised in that** an aqueous agent containing lithium salts according to formula (I) is used as the cleaning liquid.

6. Process according to claim 5, **characterised in that** aqueous agents containing between 1 and 35 % by weight, preferably between 5 and 25 % by weight of lithium salts corresponding to formula (I) are used.

7. Process for cleaning the surfaces of drilling equipment or of drill cuttings by first bringing the surfaces into contact with a cleaning liquid and then rinsing the surfaces with water, an aqueous agent containing lithium salts according to formula (I) being used as the cleaning liquid.

## Revendications

1. Utilisation de composés de formule générale (I)
R-O-SO₃⁻L⁺ (I)
dans laquelle R représente un radical alkyle saturé, insaturé, ramifié ou linéaire comportant de 8 à 22 atomes de C, pour nettoyer des trous de forage, des engins de forage ou des déblais de forage.

2. Utilisation selon la revendication 1, **caractérisée en ce qu'**on choisit des composés de formule générale (I) dans lesquels R représente un radical alkyle comportant de 8 à 16, de préférence de 8 à 14 atomes de C.

3. Utilisation selon les revendications 1 à 2, **caractérisée en ce qu'**on choisit des composés de formule (I) dans lesquels le radical R est essentiellement ou entièrement constitué de 12 atomes de C.

4. Utilisation selon les revendications 1 à 3, **caractérisée en ce qu'**on choisit des composés de formule (I) dans lesquels R représente un radical alkyle linéaire insaturé.

5. Procédé de nettoyage de trous de forage selon lequel on pompe le liquide de nettoyage à travers le trou de forage, **caractérisé en ce qu'**on utilise un agent aqueux, contenant des sels de lithium selon la formule (I) en tant que liquide de nettoyage.

6. Procédé selon la revendication 5, **caractérisé en ce qu'**on utilise des agents aqueux contenant entre 1 et 35 % en poids, de préférence entre 5 et 25 % en poids de sels de lithium de formule (I).

7. Procédé de nettoyage de surfaces d'engins de forage ou de déblais de forage, selon lequel on met d'abord les surfaces en contact avec un liquide de nettoyage, puis on les rince avec de l'eau, le liquide de nettoyage utilisé étant un agent aqueux contenant des sels de lithium selon la formule (I).
